(19) Europäisches Patentamt
European Patent Office
Office européen des brevets

(11) Publication number: 0 015 341
B1

(12) EUROPEAN PATENT SPECIFICATION

(45) Date of publication of patent specification: 25.01.84

(51) Int. Cl.³: C 07 C 143/34, C 07 C 139/00, C 10 M 1/40

(21) Application number: 79302826.7

(22) Date of filing: 07.12.79

# (54) A process for the production of basic magnesium sulphonates and the products obtained by this process.

(30) Priority: 13.12.78 GB 4828278

(43) Date of publication of application: 17.09.80 Bulletin 80/19

(45) Publication of the grant of the patent: 25.01.84 Bulletin 84/4

(84) Designated Contracting States: BE DE FR GB IT NL

(56) References cited:
EP - A - 0 000 264
EP - A - 0 013 807
EP - A - 0 014 801
FR - A - 1 524 586
FR - A - 1 533 477
FR - A - 2 235 995
US - A - 4 129 589

The file contains technical information submitted after the application was filed and not included in this specification

(73) Proprietor: Exxon Research and Engineering Company
P.O.Box 390 180 Park Avenue
Florham Park New Jersey 07932 (US)

(72) Inventor: Marsh, John Frederick
1 Valley Close
Goring on Thames, Oxfordshire (GB)
Inventor: Cleverley, John Arthur
Simla 39 Warner Crescent
Didcot, Oxfordshire (GB)

(74) Representative: Bawden, Peter Charles
Esso Chemical Research Centre PO Box 1
Abingdon
Oxfordshire OX13 6BB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 015 341 B1

# A process for the production of basic magnesium sulphonates and the products obtained by this process

The present invention relates to the production of basic magnesium sulphonates which are particularly useful as additives for lubricating oils and the present invention also provides lubricating oils containing these basic magnesium sulphonates. The term basic magnesium sulphonate is used to describe materials containing a stoichiometric excess of magnesium compared to that required to neutralize the sulphonic acid.

Basic magnesium sulphonates are well known as is their use as additives for lubricants and many methods have been proposed for their production the preferred techniques being the carbonation of an oil solution of a reaction mixture containing a sulphonic acid or sulphonate, an excess of a magnesium compound generally the alkoxide, oxide or hydroxide, usually a hydrocarbon solvent in the presence of reaction promoter systems often comprising an alcohol and/or water sometimes together with a co-promoter.

It is important that where the highly basic sulphonates are to be used as additives for lubricating oils they be not too viscous, are free of sediment, are soluble in the oil and do not cause the lubricating oil to be hazy. It is also preferred that they have as high a Total Base Number (TBN), being the number of milligrams of KOH equivalent to 1 gram of the product when titrated with strong acid, as possible since this results in the most economic use of the metal. It is also important that the compound perform well as an additive in an oil in use in an engine.

Many of the earliest techniques proposed for producing magnesium sulphonates required magnesium metal as starting material, as for example in United States Patent 3158009. Since then various reaction promoter systems have been proposed for the production of basic magnesium sulphonates from magnesium oxide. For example, U.K. Patent 1166744 is concerned with the use of mixtures of alcohol, water and amines as promoters; U.K. Patent 1297150 describes the use of oil soluble carboxylic acids and water whilst U.K. Patent 1399092 relates to the use of amine salts of carboxylic acids, alcohol and water. US 4 129 589 describes the use an oil-soluble carboxylic compound in the promoter system, the preferred promoter being acetic acid. In addition, water and an alcohol are added during the carbonation. In each instance, specific process conditions have been proposed for the particular promoter each generally involving complex multi-stage processes or undesirably expensive process conditions.

There remains therefore a need for a simple economic process for the production of high TBN (around 400 TBN) magnesium sulphonates which is not dependent on the use of a particular promoter or complex reaction steps.

The present invention therefore provides a process for the production of basic magnesium sulphonates comprising carbonating a mixture containing:

(a) an oil soluble sulphonate or sulphonic acid
(b) a stoicheiometric excess of a magnesium compund above that required to react with (a)
(c) a hydrocarbon solvent
(d) a $C_1$ to $C_5$ alcohol
(e) water and
(f) a reaction promoter other than a diketone or a $C_8$—$C_{10}$ carboxylic acid

wherein carbonation is effected at a temperature of from 55°C to 70°C for from 1 to 2 hours, then at from 65°C to 75°C for a further 1 to 2 hours and at a temperature from 70°C to 55°C during the remainder of carbonation and carbonation is continued until from 80% to 120% of the stoicheiometric amount of carbon dioxide required to react with the excess magnesium compound has been passed through the reaction mixture and for sufficient time to ensure that from 70% to 90% of the carbon dioxide theoretically required to convert the excess of the magnesium compound to magnesium carbonate has been absorbed by the reaction mixture.

We have found that the use of these particular carbonation conditions allows high TBN (around 400) products to be obtained without the need for the two stage processes as are described in UK Patents 1 166 744 and 1 297 150. In addition we find that these particular conditions enable one to use a variety of reaction promoters without the need to especially adjust the conditions according to the promoter. Furthermore, our process has the economic advantage over processes such as the one of UK Patent 1 399 092 in that unwanted volatile materials may be removed before filtration thus requiring filtration of a much smaller volume.

We have found that the choice of temperature conditions used during carbonation is important to obtain a product of acceptable viscosity and filterability and that the reaction mixture should preferably be at a temperature in the range 50°C to 65°C at the start of carbonation and since the reaction between magnesium oxide and sulphonic acid is exothermic this should be allowed for during the process. We have also found that the specified temperature profile during carbonation contributes to the product properties, since there is a tendency for products obtained outside this temperature profile to have an undesirably high sediment.

The exact amount of carbonation will depend upon the specific nature of the reactants but the conditions are chosen so that from 70% to 90% of the excess of the magnesium compound present is

converted to magnesium carbonate. If this amount is exceeded basic magnesium carbonate tends to be formed which deposits from the reaction mixture thus reducing the TBN of the product and impairing filterability. If less than 70% is converted to carbonate unreacted magnesium compound (generally MgO) remains which also tends to reduce filterability and also lowers the final TBN. We have found that this degree of carbonation may generally be obtained by carbonating for a period of more than 2 hours. Carbonation for more than 6 hours is economically undesirable.

The sulphonate of sulphonic acid used in the process of this invention may be natural or synthetic, the synthetic alkylaryl sulphonates and sulphonic acids being preferred. The basic alkaline earth metal sulphonates with which this invention is concerned consist of an oil solution of the magnesium sulphonate which itself acts as a surfactant to disperse the excess alkaline earth metal which is present as colloidal alkaline earth metal derivatives such as carbonate, oxide and hydroxide. Thus it is important that the sulphonate or sulphonic acid be oil soluble.

The excess of the magnesium compound provides the basicity of the material and the amount of magnesium that should be used depends upon its quality and the desired TBN of the product. The excess may be achieved by starting with the sulphonic acid and adding an amount necessary to give the required excess after reaction with the acid or by starting with magnesium sulphonate and then adding the required excess. We prefer to use from 1 to 45 more preferably 1 to 25 equivalents of magnesium for each equivalent of sulphonic acid present in the reaction mixture, this would include magnesium present if a sulphonate is used as the starting material in which case the equivalents of sulphonic acid from which the sulphonate is derived would be number of equivalents of acid.

The hydrocarbon solvent is used in an amount sufficient to keep the reaction mixture fluid during carbonation and may be aliphatic such as hexane or heptane or aromatic such as benzene, toluene or xylene, toluene being the preferred solvent. We find that 5 parts by weight of hydrocarbon solvent per part of alkaline earth metal compound is particularly suitable.

The amount of water than should be added will depend upon the amount of excess magnesium compound present. Where magnesium oxide is used we prefer to use from 0.5 to 2 parts by weight of water based on the total amount of magnesium oxide.

The presence of the alcohol in the reaction mixture improves both the product and the reaction by enhancing the formation of the basic colloidal alkaline earth metal compound. Examples of suitable alcohols include ethanol and methanol. As with the other ingredients the amount of alcohol that should be used depends upon the amounts of the other ingredients, especially the amount of the excess of the alkaline earth metal compound. However, where magnesium oxide is the alkaline earth metal compound, we prefer to use from 0.5 to 4 more preferably 0.5 to 2 parts by weight of the alcohol based on the total weight of the magnesium oxide.

We have found that an additional reaction promoter should be present to achieve the desired high TBN. One benefit of our invention is that any of the previously proposed promoters may be used with our reaction conditions. Examples of reaction promoters that may be used include the amines described in U.K. patent 1166744, the oil soluble carboxylic acids of U.K. patent 1297150 and the amine salts of acids described in U.K. patent 1399092. Mixtures of these promoters may also be used. The amount of promoter that should be used depends upon the nature of the promoter, the nature of the magnesium compound and its quality and the TBN required. We prefer however to use from 0.02 to 1 parts by weight of promoter based on the total amount of the magnesium compound present. Our preferred promoter is ethylene diamine.

The addition of an oil soluble alkyl phenol to the reaction mixtures may also be useful in that it can give rise to product of improved viscosity. The alkyl phenols may be simple phenols, such as nonyl phenol, decyl and dodecyl phenol bridged phenols of the general formula:

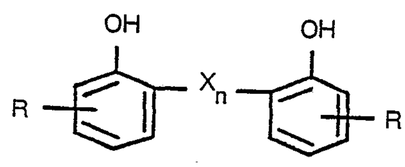

Where R is an alkyl group containing at least 8 carbon atoms, X is sulphur or $(CH_2)$ and n is 1 or 2. The amount of the phenol that should be incorporated depends upon the nature of the other ingredients, but in our preferred process for the production of basic magnesium sulphonates from magnesium oxide, we prefer to use from 0 to 1 parts by weight based on the total weight of magnesium oxide present in the reaction mixture.

It should be appreciated that within the ranges of amounts specified above the preferred amounts of materials to be used will depend upon the relative proportions of all the various components in the reaction mixture.

Although the order in which the components are charged to the reaction vessel is not critical we prefer that the sulphonic acid, the hydrocarbon solvent, the $C_1$ to $C_5$ alcohol and the magnesium compound be mixed first so that the magnesium compound and the sulphonic acid can react before introduction of the promoter.

After carbonation the product is stripped to remove the volatile materials such as alcohol water, promoter (where volatile) and solvent and the remaining solids in the reaction mixture are removed preferably by filtration or centrifugation. Although the product may be stripped first and then filtered or vice versa it is an economic advantage of our invention that volatiles may be removed before filtration so reducing the volume to be filtered. Further carbon dioxide may be passed through the reaction mixture during stripping. The final product is thus obtained as an oil solution of the basic alkaline earth metal sulphonate.

The magnesium sulphonates obtained from the process of the present invention are useful as additives for lubricants where their basicity neutralises acids formed by the operation of the engine and the surfactant part of the compound helps disperse unwanted residues in the oil to reduce the formation of harmful deposits and enhances the antirust properties of the lubricant.

The basic magnesium sulphonates of this invention may be used in a wide variety of lubricating oils. The oils may be natural or synthetic or mixtures thereof and the main uses are in crankcase lubricants, two cycle and aviation lubricants. The amount of the sulphonate that should be included in the oil depends upon the type of oil concerned and its application. For crankcase oils, we prefer to use from 0.01% to 5 wt.% based on the weight of the oil.

The sulphonates may be used in combination with other conventional additives for lubricating oils such as for example other highly basic metal additives particularly other alkaline earth metal sulphonates and alkaline earth metal phenates and sulphurised phenates. In addition the oils may contain ashless dispersants such as the products obtained by the reaction of polyamines or polyols with polyisobutylene succinic anhydride and anti-oxidants, antiwear agents and anti-corrosion additives such as the well known zinc dialkyldithiophosphates. The oils may also contain viscosity index modifiers such as the well known olefine copolymers.

The present invention is illustrated but in no way limited by reference to the following Test and Example. In the following test to demonstrate the effect of varying carbonation conditions, a reaction mixture was prepared at room temperature in a flask fitted with a reflux condenser, heated to 60°C and Carbon dioxide introduced into the reaction mixture. After the desired amount of carbon dioxide had been introduced carbonation was stopped and the temperature of the mixture raised to 150°C and stripped under a vacuum of 20 mm of mercury to remove the volatile materials. The mixture was then cooled and filtered to yield an oil solution of the required basic magnesium sulphonate.

*Test*

81.6 grams of a 90 wt.% active ingredient oil solution of a $C_{24}$ branched chain alkyl benzene sulphonic acid, and 51.1 grams of magnesium oxide, 95.6 grams of a paraffinic mineral oil of viscosity 90 centistokes at 100°F, 256 grams of Toluene, 35 grams of methanol, 28.7 grams neo-decanoic acid and 45.0 grams of water were carbonated under different conditions with the following results:

| Carbonation Conditions | Product |
|---|---|
| (1) 95 cc's/minute | TBN 375 mg KoH/g |
| For 3 hours | Highly Viscous |
| * (70% of stoichiometric) | |
| (2) 137 cc's/minute | TBN 424 mg KoH/g |
| For 3 hours | |
| * (stoichiometric) | |
| (3) 137 cc's/minute | TBN 250 mg KoH/g |
| For 6 hours | |
| * (200% stoichiometric) | |

*Amount of carbon dioxide passed through.

The theoretical TBN of each run was the same showing that magnesium had been deposited during run 3.

Example

276.2 grams of a 70% active ingredient oil solution of a $C_{24}$ branched chain alkyl benzene sulphonic acid, 214 grams paraffinic mineral oil 640 grams of toluene and 9—7 grams of methanol were mixed and stirred with 124 grams of magnesium oxide. When neutralisation of the sulphonic acid was complete, 12.5 grams of ethylene diamine, 113 grams of water and 78.3 grams of methanol were added, the temperature adjusted to 56°C and carbonation started at a rate of 256 cc/minute. After 30 minutes carbonation the temperature was adjusted to 70°C and carbonation continued for a further 3 hours 36 minutes. The product filtered well after removal of volatile materials, had a low viscosity and a TBN of 423 mg KOH/gram.

The process described above was repeated except that the temperature was held at 55°C for 1 hour 30 minutes and then raised to 70°C for a further 1 hour 30 minutes, the final product could be filtered very quickly.

Similar preparations were made keeping the temperature constant throughout carbonation by cooling and/or heating with the following results

| Temperature | |
|---|---|
| 45°C | Product highly viscous and solvent could not be stripped |
| 50°C | Product of high viscosity and filtration slow |
| 55°C | Fast filtration |
| 60°C | Solvent removal difficult due to foaming |
| 65°C | Higher sediment, poor filtration and solvent removal very difficult due to foaming. |

**Claims**

1. A process for the production of basic magnesium sulphonates comprising carbonating a mixture containing:

(a) an oil soluble sulphonate or sulphonic acid

(b) a stoichiometric excess of a magnesium compound above that required to react with (a)

(c) a hydrocarbon solvent

(d) a $C_1$ to $C_5$ alcohol

(e) water and

(f) a reaction promoter other than a diketone or a $C_8$—$C_{10}$ carboxylic acid

wherein carbonation is effected at a temperature of from 55 to 70°C for the first 1 to 2 hours, then at from 65°C to 75°C for a further 1 to 2 hours and at from 70°C to 55°C during the remainder of carbonation, and the carbonation is continued until from 80% to 120% of the stoichiometric amount of carbon dioxide required to react with the excess magnesium compound has been passed through the reaction mixture and for sufficient time to ensure that from 70% to 90% of the carbon dioxide theoretically required to convert the excess of the magnesium compound to magnesium carbonate has been absorbed by the reaction mixture.

2. A process according to claim 1 in which the temperature of the reaction mixture is between 50 and 60°C at the start of carbonation.

3. A process according to either of the preceding claims, in which the $C_1$ to $C_5$ alcohol is methanol.

4. A process according to any of the preceding claims, in which the magnesium compound is magnesium oxide.

5. A process according to claim 4, in which from 0.5 to 2 parts by weight of water based on the total amount of magnesium oxide are used.

6. A process according to claim 4 or claim 5, in which from 0.5 to 4 parts by weight of the alcohol based on the total weight of magnesium oxide are used.

7. A process according to any of the preceding claims in which from 0.02 to 1 part by weight of the promoter based on the total amount of the magnesium compound present is used.

8. A process according to any of the preceding claims in which the promoter is ethylene diamine.

9. A process according to any of the preceding claims in which the sulphonic acid and the magnesium compound are reacted prior to admixture with the promoter.

**Revendications**

1. Procédé de production de sulfonates de magnésium basiques, comprenant la carbonatation d'un mélange contenant:

(a) un sulfonate ou un acide sulfonique soluble dans l'huile

(b) un excès stoechiométrique d'un composé de magnésium par rapport à la quantité nécessaire pour réagir avec (a)

(c) un solvant hydrocarboné

(d) un alcool en $C_1$ à $C_5$

(e) de l'eau et

(f) un activateur de réaction autre qu'une dicétone ou un acide carboxylique en $C_8$—$C_{10}$ dans lequel la carbonatation est conduite à une température de 55 à 70°C pendant 1 à 2 heures, puis à une température de 65 à 75°C pendant encore 1 à 2 heures et à une température de 70 à 55°C pendant le reste de la carbonatation, et cette dernière est poursuivie jusqu'à ce que 80 à 120% de la quantité stoechiométrique d'anhydride carbonique nécessaire pour réagir avec le composant de magnésium en excès soient passés dans le mélange réactionnel, et pendant une période suffisante pour assurer que 70 à 90% de l'anhydride carbonique théoriquement nécessaire pour convertir l'excès de composé de magnésium en carbonate de magnésium aient été absorbés par le mélange réactionnel.

2. Procédé suivant la revendication 1, dans lequel la température du mélange réactionnel se situe entre 50 et 60°C au début de la carbonatation.

3. Procédé suivant l'une des revendications précédentes, dans lequel l'alcool en $C_1$ à $C_5$ est le méthanol.

4. Procédé suivant l'une quelconque des revendications précédentes, dans lequel le composé de magnésium est l'oxyde de magnésium.

5. Procédé suivant la revendication 4, dans lequel on utilise 0,5 à 2 parties en poids d'eau sur la base de la quantité totale d'oxyde de magnésium.

6. Procédé suivant la revendication 4 ou la revendication 5, dans lequel on utilise 0,5 à 4 parties en poids de l'alcool sur la base du poids total d'oxyde de magnésium.

7. Procédé suivant l'une quelconque des revendications précédentes, dans lequel on utilise 0,02 à 1 partie en poids de l'activateur sur la base de la quantité totale du composé de magnésium présent.

8. Procédé suivant l'une quelconque des revendications précédentes, dans lequel l'activateur est l'éthylènediamine.

9. Procédé suivant l'une quelconque des revendications précédentes, dans lequel l'acide sulfonique et le composé de magnésium sont amenés à réagir avant l'opération de mélange avec l'activateur.

**Patentansprüche**

1. Verfahren zur Herstellung von basischen Magnesium-sulfonaten, wobei ein Gemisch carbonsiert wird, welches

(a) ein öl-lösliches Sulfonat oder eine öl-lösliche Sulfonsäure,

(b) einen stöchiometrischen Überschuß einer Magnesium-verbindung über die für die Umsetzung mit (a) benötigte Menge hinaus,

(c) ein Kohlenwasserstoff-Lösungsmittel,

(d) einen $C_1$—$C_5$-Alkohol,

(e) Wasser und

(f) einen Reaktionspromotor unter Ausnahme eines Diketons oder einer $C_8$—$C_{10}$-Carbonsäure enthält,

worin die Carbonisierung bei einer Temperatur von 55 bis 70°C für die ersten beiden Stunden, anschließend bei 65°C bis 75°C für weitere 1 bis 2 Stunden und bei 70°C bis 55°C während der restlichen Carbonisierung gehalten wird, und die Carbonisierung fortgesetzt wird, bis 80 bis 120% der stöchiometrischen Menge an Kohlendioxid, die zur Umsetzung mit der überschüssigen Magnesiumverbindung erforderlich ist, durch das Reaktionsgemisch geführt worden ist, und für eine hinreichende Zeit, um zu gewährleisten, daß 70% bis 90% des Kohlendioxids, welches theoretisch zur Überführung des Überschusses der Magnesiumverbindung in Magnesiumcarbonat erforderlich ist, durch das Reaktionsgemisch absorbiert worden ist.

2. Verfahren nach Anspruch 1, worin die Temperatur des Reaktionsgemisches zwischen 50 und 60°C liegt bei Beginn der Carbonisierung.

3. Verfahren nach einem der voranstehenden Ansprüche, worin der $C_1$—$C_5$-Alkohol Methanol ist.

4. Verfahren nach einem der voranstehenden Ansprüche, worin die Magnesiumverbindung Magnesiumoxid ist.

5. Verfahren nach Anspruch 4, worin 0,5 bis 2 Gewichtsteile Wasser, bezogen auf die Gesamtmenge von Magnesiumoxid, verwendet werden.

6. Verfahren nach Anspruch 4 oder Anspruch 5, worin 0,5 bis 4 Gewichtsteile de Alkohols, bezogen auf die Gesamtmenge von Magnesiumoxid, verwendet werden.

7. Verfahren nach einem der voranstehenden Ansprüche, worin 0,02 bis 1 Gewichtsteile des Promotors, bezogen auf die Gesamtmenge der vorliegenden Magnesiumverbindung, verwendet werden.

8. Verfahren nach einem der voranstehenden Ansprüche, worin der Promotor Ethylendiamin ist.

9. Verfahren nach einem der vorsanstehenden Ansprüche, worin die Sulfonsäure und die Magnesiumverbindung vor dem Vermischen mit dem Promotor umgesetzt werden.